# EUROPÄISCHE PATENTSCHRIFT

(11) **EP 0 830 661 B1**
(45) Veröffentlichungstag und Bekanntmachung des Hinweises auf die Patenterteilung: **04.08.1999**
(21) Anmeldenummer: 96919614.6
(22) Anmeldetag: 24.05.1996
(51) Int. Cl.: G08C 17/04, H02M 3/22

(54) **ANORDNUNG ZUR GALVANISCH GETRENNTEN ÜBERTRAGUNG VON HILFSENERGIE (GLEICHSPANNUNG) UND INFORMATIONEN ZU EINER ELEKTRONISCHEN EINHEIT**
ARRANGEMENT FOR THE GALVANICALLY ISOLATED TRANSMISSION OF AUXILIARY POWER (DIRECT VOLTAGE) AND INFORMATION TO AN ELECTRONIC UNIT
SYSTEME DE TRANSMISSION A ISOLEMENT GALVANIQUE D'ENERGIE AUXILIAIRE (TENSION CONTINUE) ET D'INFORMATIONS A UNE UNITE ELECTRONIQUE

(30) Priorität: 02.06.1995 DE 19520940
(43) Veröffentlichungstag der Anmeldung: 25.03.1998
(73) Patentinhaber: SIEMENS AKTIENGESELLSCHAFT, 80333 München (DE)
(72) Erfinder: LESCHE, Wolfgang, D-14165 Berlin (DE)
(86) Internationale Anmeldenummer: DE9600950
(87) Internationale Veröffentlichungsnummer: WO9638829

(56) Entgegenhaltungen:
- EP-A- 0 538 624
- CH-A- 679 196

## Beschreibung

Die Erfindung befaßt sich mit dem Problem, eine elektronische Einheit unter Sicherstellung einer galvanischen Trennung mit Hilfsenergie in Form von Gleichspannung und Informationen zu versorgen. Zur Lösung dieses Problems bietet es sich an, zur galvanisch getrennten Übertragung von Hilfsenergie ein Schaltnetzteil einzusetzen, das als Eintakt- und Gegentaktwandler bekannt ist. Beispielsweise in dem Buch von O. Kilgenstein "Schaltnetzteile in der Praxis", 1988, Seiten 9 bis 13 sind derartige Schaltnetzteile beschrieben; auch in dem Buch von W. Hirschmann/A. Hauenstein "Schaltnetzteile", 1990 sind auf den Seiten 40 bis 64 Grundschaltungen verschiedener Schaltnetzteile dargelegt. Zur galvanisch getrennten Übertragung von Informationen zur elektronischen Einheit empfiehlt sich die Verwendung von Übertragern oder Optokopplern.

Aus der EP-A-O 616 924 ist eine Anordnung bekannt, die ein als Sperrwandler arbeitendes Schaltnetzteil mit einem Übertrager zur galvanisch getrennten Übertragung sowohl von Hilfsenergie von der Primärseite zur Sekundärseite als auch von Informationen in beide Richtungen aufweist. Dabei wird zur Informationsübertragung von der Primärseite zur Sekundärseite die Energiespeicherphase, während der eine in Reihe mit der Primärwicklung an einer Gleichspannung liegende steuerbare Schaltanordnung geschlossen ist, entsprechend der zu übertragenden Information kurzzeitig unterbrochen, was sekundärseitig zu entsprechenden Spannungssprüngen führt, die durch eine Auswerteschaltung detektiert werden. Zur Informationsübertragung von der Sekundärseite zur Primärseite wird die Sekundärseite während der Energiespeicherphase entsprechend der zu übertragenden Information kurzzeitig niederohmig geschaltet, was zu entsprechenden Stromstößen auf der Primärseite führt, die mittels einer weiteren Auswerteschaltung detektiert werden.

Aus der CH-A-679 196 ist ein ähnliches Schaltnetzteil bekannt, das ebenfalls als Sperrwandler arbeitet und bei dem in der Energieabgabephase, wenn die in Reihe mit der Primärwicklung an der Gleichspannung liegende steuerbare Schaltanordnung offen ist, Informationen in beide Richtungen übertragen werden. Dabei wird zur Informationsübertragung von der Sekundärseite zur Primärseite die Sekundärwicklung entsprechend der zu übertragenden Information kurzzeitig kurzgeschlossen.

Schließlich ist es auch aus der EP-A-O 538 624 bekannt, von der Sekundärseite eines Schaltnetzteils eine Information zur Primärseite zu übertragen, jedoch wird bei der aus dieser Druckschrift bekannten Anordnung zur Informationsübertragung durch einen entsprechend betätigten elektronischen Schalter die Spannung eines Ladekondensators an die Sekundärwicklung des Übertragers des Schaltnetzteils angelegt.

Bei der in Anspruch 1 angegebenen erfindungsgemäßen Anordnung wird in vorteilhafter Weise die Rückschlagspannung des Übertragers des Schaltnetzteils zur Informationsübertragung von der Sekundär- zur Primärseite ausgenutzt.

Vorteilhafte Weiterbildungen der erfindungsgemäßen Anordnung sind den Unteransprüchen zu entnehmen.

Zur Erläuterung der Erfindung ist in
Figur 1 ein Ausführungsbeispiel einer erfindungsgemäßen Anordnung mit einem Eintaktwandler, in
Figur 2 eine Darstellung mehrerer Zeitdiagramme zur Erklärung der Wirkungsweise des Ausführungsbeispieles nach Figur 1, in
Figur 3 ein weiteres Ausführungsbeispiels der erfindungsgemäßen Anordnung mit einem Schaltnetzteil als Gegentaktwandler, in
Figur 4 eine Darstellung mehrerer Zeitdiagramme zur Erklärung der Arbeitsweise der Anordnung nach Figur 3, in
Figur 5 in verschiedener Weise modulierte Primär-Informationen mit besonderer Eignung zur Übertragung bei einer Anordnung mit einem Eintaktwandler, in
Figur 6 eine Darstellung verschieden modulierter Primär-Informationen mit besonderer Eignung für eine Anordnung mit einem Gegentaktwandler, in
Figur 7 eine Darstellung mit Zeitdiagrammen mit möglichen modulierten Primär- und Sekundär-Informationen mit besonderer Eignung für eine Anordnung mit einem Eintaktwandler und in
Figur 8 eine Darstellung von verschiedenen Zeitdiagrammen mit unterschiedlich modulierten Primär- und Sekundär-Informationen mit besonderer Eignung für eine Anordnung mit Gegenkontaktwandler wiedergegeben.

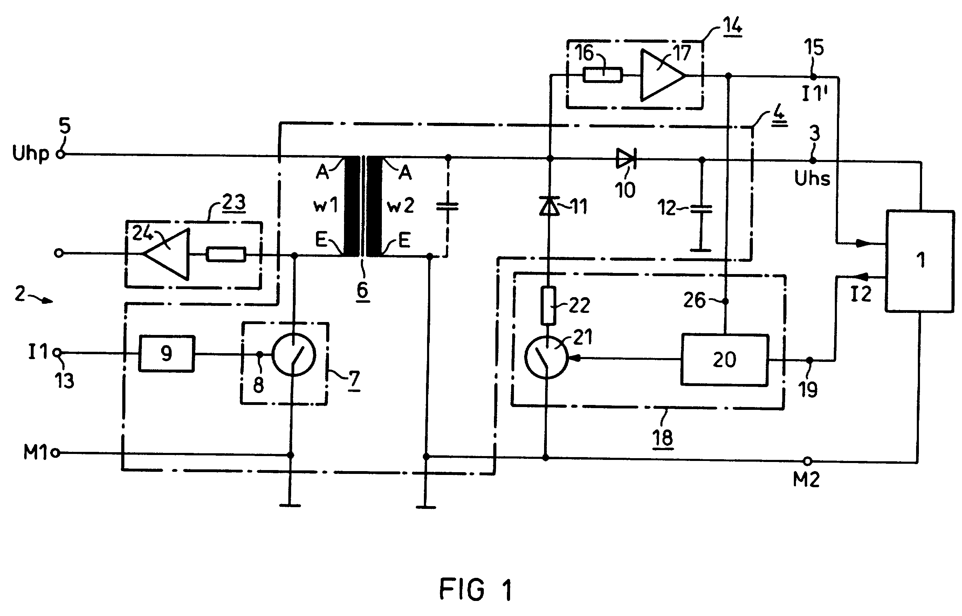

Das in Figur 1 dargestellte Ausführungsbeispiel der erfindungsgemäßen Anordnung zeigt schematisch eine elektronische Einheit 1, beispielsweise einen Meßumformer, der galvanisch getrennt von einer Primärseite 2 her sowohl mit Hilfsenergie in Form einer Gleichspannung als auch mit Informationen versorgt werden soll. Die elektronische Einheit 1 ist zur Versorgung von Hilfsenergie mit einer Ausgangsklemme 3 eines Schaltnetzteiles 4 in Form eines Eintaktwandlers verbunden; an der Ausgangsklemme 3 wird eine Gleichspannung Uhs erzeugt.

Zur Gewinnung der Gleichspannung Uhs an der Ausgangsklemme 3 ist das Schaltnetzteil 4 mit einem Eingang 5 primärseitig an eine Gleichspannung Uhp angeschlossen. Mit der Eingangsklemme 5 ist ein Anfang A einer Primärwicklung wl eines Übertragers 6 verbunden; das Ende E der Primärwicklung w1 ist über die Schaltstrecke einer elektronischen Schaltanordnung 7 mit Masse M1 verbunden. Die Schaltanordnung 7, die im vorliegenden Fall von einem elektronischen Schaltelement beispielsweise in Form eines Transistors gebildet ist, ist mit ihrem Steuereingang 8 an eine Ansteuerschaltung 9 angeschlossen. Die Schaltanordnung 7 wird also von der Ansteuerschaltung 9 betätigt, so daß bei jeder Betätigung ein Stromdurchfluß durch die Primärwicklung w1 des Übertragers 6 erfolgt. Durch den betätigungsentsprechend erfolgenden Stromdurchfluß durch die Primärwicklung w1 des Übertragers 6 wird auch ein Stromdurchfluß durch die Sekundärwicklung w2 des Übertragers 6 verursacht, deren Anfang A über ein Gleichrichter-Element 10 mit der Ausgangsklemme 3 des Schaltnetzteiles 4 verbunden ist; das Ende E der Sekundärwicklung w2 ist mit Masse M2 verbunden. An den Anfang A der Sekundärwicklung w2 ist in üblicherweise eine gegensinnig zum Gleichrichter-Element 10 gepolte Diode 11 angeschlossen. Ferner ist an der von der Sekundärwicklung w2 abewandten Seite des Gleichrichter-Elementes 10 in üblicherweise ein Kondensator 12 nach Masse geschaltet.

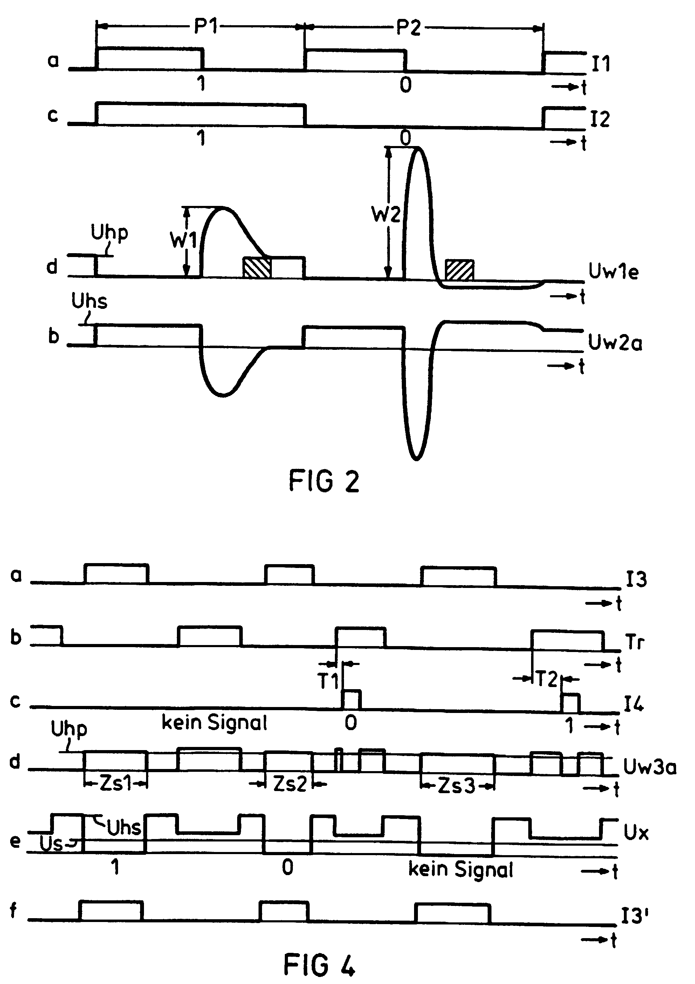

Bei der dargestellten Anordnung nach Figur 1 ist die Ansteuerschaltung 9 nicht in der bei Schaltnetzteilen sonst üblichen Weise ausgeführt, sondern so ausgebildet, daß sie aufgrund einer an einer Eingangsklemme 13 anliegenden Primär-Information I1 die Schaltanordnung 7 entsprechend dieser Information I1 betätigt. Die Primär-Information I1 kann beispielsweise einen Zeitverlauf haben, wie er in dem Diagramm a der Figur 2 wiedergegeben ist. In diesem Diagramm ist der Wert "1" der Primär-Information durch eine Signaldauer P1 und der Wert "0" der Primär-Information durch eine Signaldauer P2 ausgedrückt. Dementsprechend wird die Schaltanordnung 7 bei einem Wert "1" der Primär-Information I1 jeweils langer geschlossen als bei einem Wert "0" der Information I1.

Durch diese Betätigung der Schaltanordnung 7 ergibt sich am Wicklungsanfang A der Sekundärwicklung w2 eine Spannung Uw2a, wie sie in dem Diagramm b der Figur 2 gezeigt ist. Dabei sind die negativen Abschnitte der Spannung Uw2a durch die Rückschlagspannung des Übertragers 6 verursacht. Diese wird ausgenutzt, um mittels einer Auswerteschaltung 14 eine Information I1' an einer Klemme 15 zu gewinnen, die der primärseitig gesendeten Information I1 entspricht. Dazu ist mit dem Anfang A der Sekundärwicklung w2 über einen Widerstand 16 ein Komparator-Element 17 angeschlossen, das beim Unterschreiten einer vorgebenen unteren Spannungsschwelle ein "0"-Signal und beim Überschreiten einer anderen vorgebenen höheren Spannungsschwelle ein "1"-Signal erzeugt, so daß das empfangene Signal I1' der gesendeten Primär-Information I1 entspricht; bei dem Komparator-Element 17 kann es sich um einen Buffer HC04 der Fa. Motorola handeln (vgl. Datenbuch "Motorola High-Speed CMOS Logic Data" Series D, 1989). Damit ist ohne einen zusätzlichen Überträger oder einen zusätzlichen Optokoppler nicht nur eine Gleichspannung Uhs zur Hilfsenergieversorgung der elektronischen Einheit 1 bereitgestellt, sondern auch die Primär-Information I1 zur elektronischen Einheit 1 in Form des Signals I1' übertragen.

Für den Fall, daß von der elektronischen Einheit 1 eine Sekundär-Information I2 zur Primärseite der Anordnung nach Figur 1 übertragen werden soll, ist auf der Sekundärseite des Schaltnetzteiles 4 eine Sendeeinrichtung 18 vorgesehen, die mit ihrem Eingang 19 an die elektronische Einheit 1 zur Aufnahme der zu übertragenden Sekundär-Information I2 angeschlossen ist. Die Sendeeinrichtung 18 enthält eingangsseitig eine Signalaufbereitungsvorrichtung 20 in Form einer Logikschaltung, der ein elektronischer Schalter 21 nachgeordnet ist, der mit seiner Schaltstrecke und einem Widerstand 22 eine Reihenschaltung bildet. Diese Reihenschaltung liegt in Reihe mit der Diode 11 und bewirkt, daß bei einer Betätigung des elektronischen Schalters 21 durch die Signalaufbereitungseinrichtung 18 die Sekundärwicklung w2 niederohmig beschaltet wird.

Hat die Sekundär-Information I2 einen zeitlichen Verlauf, wie er im Diagramm c der Figur 2 gezeigt ist, dann ist die Sekundärwicklung w2 während eines "1"-Signals der Information I2 niederohmig beschaltet, was dazu führt, daß die Rückschlagspannung einen vergleichsweise kleinen Wert W1 annimmt, wie das Diagramm d der Figur 2 zeigt, in der über der Zeit die Spannung Uw1e am Ende E der Primärwicklung w1 des Übertragers 6 gezeigt ist. Bei einem Wert "0" der Information I2 ist die Sekundärwicklung w2 hochohmig beschaltet, was zu einem Rückschlagimpuls mit einem erheblich höheren Wert W2 führt, wie ebenfalls das Diagramm d der Figur 2 erkennen läßt. Damit besteht primärseitig die Möglichkeit, die Information I2 hinsichtlich ihrer unterschiedlichen Wertigkeit zu erfassen. Dies geschieht mittels eines Auswertebausteins 23, der aus einem Schutzwiderstand in Reihe mit einem Komparator-Bauteil 24 besteht. Dieses Komparator-Bauteil 24 entspricht in seiner Ausführung dem Komparator-Element 17; es erzeugt bei einer Eingangsspannung größer als 3 V einen Impuls mit dem Wert "0" und bei einer Eingangsspannung kleiner als 2 V einen Impuls mit dem Wert "1". Im Diagramm d der Figur 2 ist durch einen von links unten nach rechts oben schraffierten Block ein Impuls mit dem Wert "0" und durch einen Block mit einer Schraffur von links oben nach rechts unten ein Signal mit dem Wert "1" gekennzeichnet. Das Diagramm d der Figur 2 zeigt deutlich, daß auf der Primärseite eine Information I2' entsprechend der gesendeten Sekundär-Information I2 gewonnen wird.

Voraussetzung für diese Wirkungsweise der Anordnung nach Figur 1 ist, daß eine Synchronisation der Sekundärseite mit der Primärseite gegeben ist; dies wird bei der Anordnung nach Figur 1 selbsttätig dadurch bewirkt, daß der Ausgang der Auswerteschaltung 14 mit einem Synchronisiereingang 26 der sekundärseitigen Signalaufbereitungseinrichtung 20 verbunden ist.

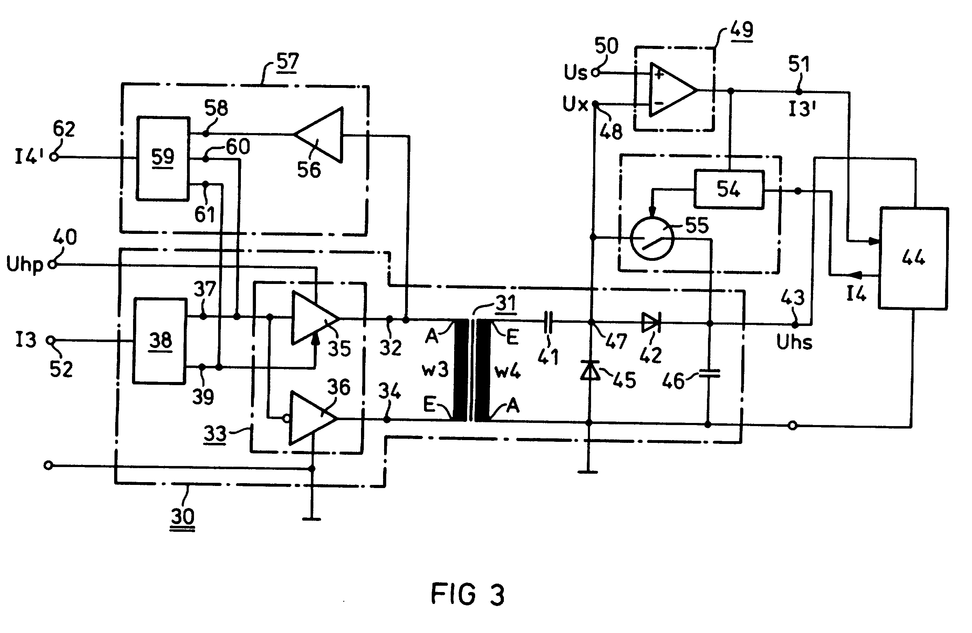

Bei dem Ausführungsbeispiel der erfindungsgemäßen Anordnung nach Figur 3 ist ein Schaltnetzteil 30 in Form eines Gegentaktwandlers verwendet. Der Gegentaktwandler enthält einen Überträger 31, der mit einem Ende A seiner Primärwicklung w3 an einen Ausgang 32 einer Schaltanordnung 33 angeschlossen ist; das Ende E der Primärwicklung w3 ist mit einem weiteren Ausgang 34 der Schaltanordnung 33 verbunden.

Die Schaltanordnung 33 enthält einen Buffer 35 und einen weiteren Buffer 36 mit einem invertierenden Eingang. Die Eingänge beider Buffer 35 und 36 sind an einen Steuerausgang 37 einer Ansteuerschaltung 38 angeschlossen. Die beiden Buffer 35 und 36 wirken als elektronische Schalter und sind aufgrund ihres gemeinsamen eingangsseitigen Anschlusses an die Ansteuerschaltung 38 sowie aufgrund des invertierenden Einganges des weiteren Buffers 36 so betätigbar, daß zu einem Zeitpunkt nur jeweils einer der beiden Buffer 35 oder 36 zur Gleichspannung durchgeschaltet ist. Die Buffer 35 und 36 können so ausgebildet sein, wie es in dem Handbuch von Motorola "High-Speed CMOS Logik Data", Series D 1989 in Form des Bausteines HC241A dargestellt ist. Die Ansteuerschaltung 38 hat bei der Anordnung nach Figur 3 einen weiteren, sogenannten Tristate-Ausgang 39, über den als Enable-Signal ein Tristate-Signal an den einen Buffer 35 schaltbar ist. Als Betriebsspannung für die Buffer 35 und 36 dient die Gleichspannung Uhp, die an einer Eingangsklemme 40 der Anordnung anliegt. Aus Gründen der einfacheren und übersichtlicheren Darstellung ist die Verbindung des weiteren Buffers 36 mit der Gleichspannung Uhp nicht gezeichnet.

Die Sekundärwicklung w4 des Übertragers 31 ist über einen Kondensator 41 und eine Gleichrichter-Element 42 mit einer Ausgangsklemme 43 des Schaltnetzteiles 30 verbunden, an der eine Gleichspannung Uhs zur Betriebsspannungsversorgung einer nachgeordneten elektronischen Einheit 44 liegt. Eine Diode 45 und ein Kondensator 46 vervollständigen die Beschaltung der Sekundärwicklung w4 des Übertragers 31; es ist damit eine Spannungsverdopplung erreicht.

Mit einem zwischen dem Kondensator 41 und dem Gleichrichter-Element 42 liegenden Schaltungspunkt 47 ist ein Eingang 48 einer Auswerteschaltung 49 verbunden, bei der es sich in dem dargestellten Ausführungsbeispiel um einen als Komparator geschalteten Operationsverstärker handelt. Ein weiterer Eingang 50 der Auswerteschaltung 49 liegt an einer Schwellenspannung Us. Überschreitet die Spannung am Schaltungspunkt 47 den Wert der Schwellenspannung Us, dann wird von der Auswerteschaltung 49 an einer Ausgangsklemme 51 ein Signal I3' erzeugt, das - wie anschließend näher erläutert wird - einer Primär-Information I3 an einer Eingangsklemme 52 der Ansteuerschaltung 38 entspricht.

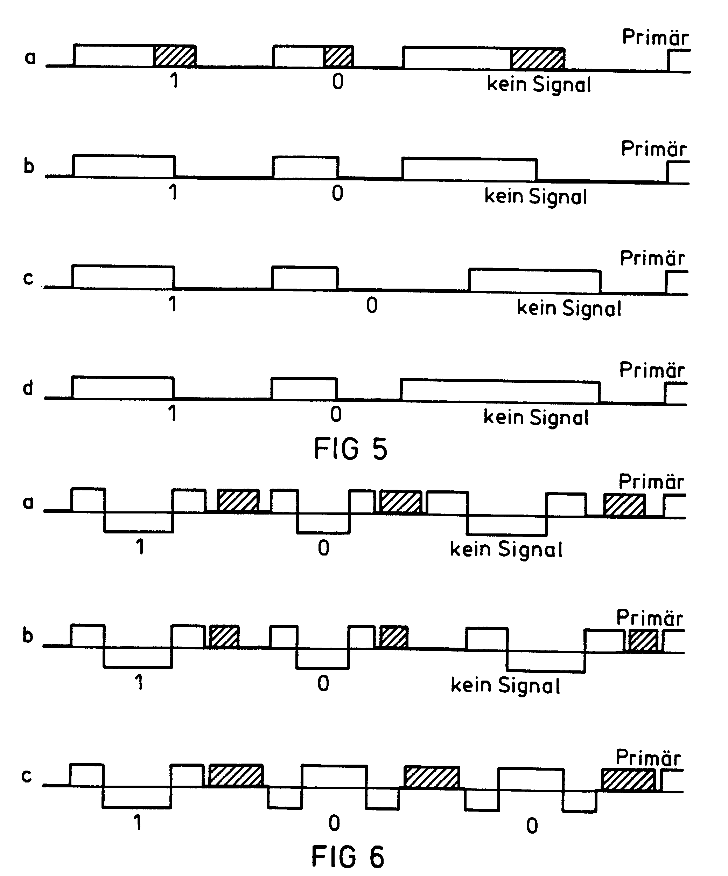

Wird als zu übertragende Primär-Information I3 eine Information gemäß dem Diagramm a der Figur 4 verwendet, dann ergibt sich - wie das Diagramm d der Figur 4 erkennen läßt - am Anfang A der Primärwicklung w3 des Übertragers 31 eine Spannung Uw3a, die während der Zeitspannen Zs₁ bis Zs₃ in ihrer Höhe jeweils der Gleichspannung Uhp entspricht. Die Zeitspannen Zs₁ bis Zs₃ entsprechen damit den Zeiten, in denen die Impulse der Primär-Information I3 die Wertigkeit "1" aufweisen. Aufgrund der mittels der Kondensatoren 41 und 46 auf der Sekundärseite bewirkten Spannungsverdopplung ergibt sich - wie das Diagramm e der Figur 4 zeigt an dem Schaltungspunkt 47 eine Spannung Ux, die außerhalb der Zeitspannen Zs1 bis Zs3 zum Teil relativ hohe Werte annimmt, die der Höhe der Spannung Uhs entsprechen. Während jeweils der Zeitspannen Zs1 bis Zs3 liegen die Werte der Spannung Ux unterhalb der Schwellenspannung Us, was zur Ausgabe von "1"-Impulsen am Ausgang 51 der Auswerteschaltung 49 führt. Die erfaßte Information I3' entspricht der Primär-Information I3.

Um auch eine Übertragung einer Information I4 von der elektronischen Einheit 44 zur Primärseite zu ermöglichen, wird von der Ansteuerschaltung 38 an ihren Ausgang 39 ein Tristate-Signal Tr erzeugt, das immer dann auftritt, wenn die Primär-Information 13 eine Wertigkeit "0" aufweist bzw. die Schaltanordnung 33 geöffnet ist. Aufgrund des Effektes der Rückschlagspannung wirkt sich das Tristate-Signal Tr bei der Spannung Uw3A am Anfang der Primärwicklung w3 als eine über den Wert der Gleichspannung Uhp liegende Spannung aus, wie das Diagramm d der Figur 4 deutlich erkennen läßt. Daraufhin erfährt die Spannung Ux am Schaltungspunkt 47 jeweils während der Tristate-Signale eine Spannungsabsenkung, die jedoch oberhalb der Schwellenspannung Us (vgl. Diagramm e) bleibt. Von der Auswerteschaltung 49 wird daraufhin ein entsprechendes Synchronisierungssignal an eine Sendeeinrichtung 54 gegeben, die daraufhin bei einer zu übertragenden Sekundär-Information I4 mit der Wertigkeit "0" ein gegenüber dem Tristate-Signal um eine vorgegebene Zeit T1 zeitlich verschobenes Signal und bei einer Information I4 mit der Wertigkeit "1" ein um eine andere Zeit T2 verschobenes Signal abgibt und damit jeweils während der Dauer der Signale gemäß der zu übertragenden Sekundär-Informamtion I4 den elektronischen Schalter 55 betätigt, wobei das Gleichrichter-Element 42 kurzgeschlossen wird. Dadurch fällt die Spannung Uw3A am Anfang der Primärwicklung w3 während der Signale gemäß I4 jeweils auf den Wert 0 ab, wie das Diagramm d der Figur 4 erkennen läßt. Da diese Spannung über einen weiteren Komparator 56 ähnlich dem Komparator 24 gemäß Figur 1 in einer Auswerteschaltung einem Eingang 60 einer Logikschaltung 59 zugeführt wird, an deren weiteren Eingang 58 auch das Ansteuersignal der Ansteuerschaltung 38 und an deren zusätzlichen Eingang 61 das Tristate-Signal ansteht, ergibt sich an der Ausgangsklemme 59 eine empfangene Information I4', die der Sekundär-Information I4 entspricht.

Damit ist auch mit der Anordnung gemäß Figur 3 sowohl eine galvanisch getrennte Übertragung von Hilfsenergie als auch eine galvanisch getrennte Informationsübertragung in beiden Richtungen ohne zusätzliche Überträger oder ohne einen zusatzliche Optokoppler möglich.

Wie das Diagramm a der Figur 5 zeigt, kann - wie es im Zusammenhang mit der Erläuterung der Ausführungsbeispiele nach den Figuren 1 und 3 bereits erklärt worden ist - als Primär-Information mit zwei Signaldauern gearbeitet werden, um Primär-Informationen mit den Signalzuständen "0" und "1" zu übertragen. Auch ein "kein Signal" kann durch eine Signaldauer weiterer Länge übertragen werden. Wird ein geregelter Sperrwandler benutzt, dann ist ein Regelbereich in einer Größe von etwa +- 20 % möglich, was in dem Diagramm a durch die Schraffur gekennzeichnet ist.

Bei einem Eintaktdurchflußwandler kann ein in gleicher Weise moduliertes Gleichspannungssignal als Primär-Information benutzt werden, wie das Diagramm b der Figur 5 zeigt. Ebenso ist es möglich, mit zwei oder drei festen Einschaltdauern der jeweiligen Schaltanordnung der erfindungsgemäßen Anordnung zu arbeiten, um ein "0", "1" oder "kein Signal"-Signal zur Sekundärseite zu übermitteln, wie das Diagramm c der Figur 5 erkennen läßt. Im Diagramm d der Figur 5 ist gezeigt, daß sich auch Kombinationen der Signalverläufe nach den Diagrammen b und c zur Modulierung einer zu übertragenden Primär-Information verwenden lassen.

Auch bei Verwendung eines Gegentaktwandler als Schaltnetzteil bei der erfindungsgemäßen Anordnung können die zu übertragenden Primär-Informationen unterschiedlich moduliert sein. So zeigt das Diagramm a der Figur 6, daß mit drei festen Signaldauern eines ternären Signals gearbeitet werden kann, um Signale "1", "0" und "kein Signal" übertragen zu können. Die Impulse der in Gegenrichtung zu übertragenden Sekundär-Information treten immer dann auf, wenn ein Tristate-Signal die Primärwicklung des Übertragers stromlos geschaltet hat; die schräg schraffierten Blöcke kennzeichnen die Impulse der Sekundär-Information in ihrer zeitlichen Lage.

Entsprechend dem Diagramm c nach Figur 5 ist es bei Verwendung eines Gegentaktwandlers auch möglich, mit zwei oder drei festen Einschaltdauern auf der Primärseite zur Modulation der Gleichspannung zu arbeiten, wodurch sich dann Verhältnisse ergeben, wie sie das Diagramm b zeigt; auch hier werden die Impulse der Sekundär-Information über schraffiert dargestellte Blöcke während des Tristate-Signale übertragen.

Ferner ist es möglich - wie das Diagramm c der Figur 6 zeigt - mit einer festen Einschaltdauer für den Signalzustand "0" der Primär-Information zu arbeiten und zur Übertragung eines Signals, "1" einen Phasenwechsel vorzunehmen.

Es sind auch andere Kombinationen möglich.

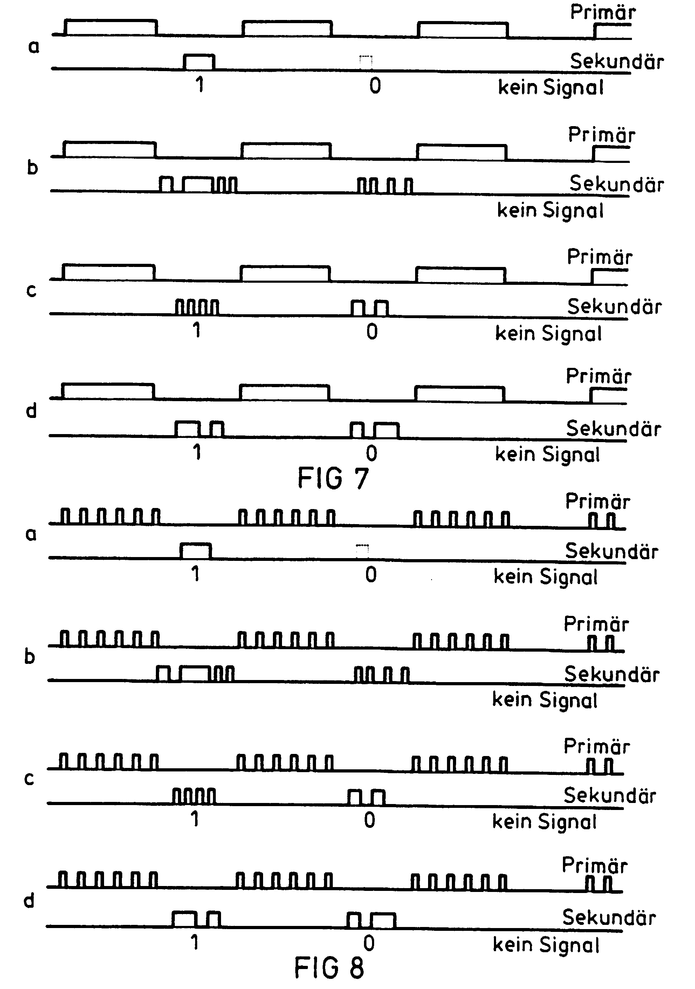

Die Diagramme a, b, c und d der Figur 7 lassen erkennen, daß im stromlosen Zustand der Primärwicklung des Übertragers der erfindungsgemäßen Anordnung nach den Figuren 1 und 3 nicht nur Sekundär-Informationen einer Modulationsart übertragen werden können, wie es bei der Erläuterung der Figuren 1 und 3 anhand der Figuren 2 und 4 unterstellt worden ist, sondern daß in den stromlosen Phasen auch Telegrammsegmente, z. B. ein Byte übertragen werden können. Übliche Start-und Stop-Bytes können dabei entfallen, da durch die Impulse der Primär-Information ein fester Synchronisationsrahmen vorgegeben ist.

Ferner kann - wie das Diagramm c der Figur 7 zeigt - eine Frequenzumtastung hervorgenommen werden, um eine Sekundär-Information "0", "1" oder "kein Signal" zu übertragen.

Gemäß dem Diagramm d der Figur 7 kommt auch eine Änderung der Frequenz - bzw. Phasenreihenfolge in Frage, um eine Sekundärinformation mit der erfindungsgemäßen Anordnung zu übertragen.

Wie die Diagramme a, b, c und d der Figur 8 erkennen lassen, kann die Primär-Information auch in Form von Pulspaketen übertragen werden. Im stromlosen Zustand der Primärwicklung können dann die Sekundär-Informationen auch in der Weise übertragen werden, wie es in den Diagrammen b bis d der Figur 8 gezeigt ist.

## Patentansprüche

1. Anordnung zur galvanisch getrennten Übertragung von Hilfsenergie und Informationen zu einer elektronischen Einheit (1), bei der
- eine Primärwicklung (w1) eines als Durchflußwandler arbeitenden Schaltnetzteils (4) mit einem Überträger (6) mit mindestens einer Primär(w1)- und einer Sekundärwicklung (w2) mit einer steuerbaren Schaltanordnung (7) eine Reihenschaltung bildet und diese Reihenschaltung an eine Gleichspannung (Uhp) führende Eingangsklemmen (5, M1) der Anordnung angeschlossen ist,
- die Sekundärwicklung (w2) einerseits über ein Gleichrichter-Element (10) mit einer Ausgangsklemme (3) und andererseits direkt mit der anderen Ausgangsklemme (M2) des Schaltnetzteiles (4) verbunden ist,
- eine Ansteuerschaltung (9) der Schaltanordnung (7) an eine die zu übertragende Primär-Information (I1) führende weitere Eingangsklemme (13) der Anordnung angeschlossen und derart ausgebildet ist, daß sie die Schaltanordnung (7) entsprechend der zur Sekundärseite des Schaltnetzteiles (4) zu übertragenden Primär-Information (I1) betätigt,
- an einen Schaltungspunkt zwischen Sekundärwicklung (w2) und Gleichrichter-Element (10) eine die Primär-Information (I1) erkennende Auswerteschaltung (14) angeschlossen ist,
- auf der Sekundärseite des Schaltnetzteiles (4) eine Sendeeinrichtung (18) vorgesehen ist, die die Belastung der Sekundärwicklung (w2) entsprechend einer zur Primärseite (2) des Schaltnetzteiles (4) zu übertragenden Sekundär-Information (I2) niederohmig schaltet, wenn die Schaltanordnung (7) geöffnet ist, und
- mit einem Ende (E) der Primärwicklung (w1) ein die Sekundär-Information (I2) erkennender Auswertebaustein (23) verbunden ist.

2. Anordnung nach Anspruch 1,
**dadurch gekennzeichnet,** daß
- bei einem Eintaktwandler die Sendeeinrichtung (18) eine Reihenschaltung aus einen Lastwiderstand (22) und der Schaltstrecke eines elektronischen Schalters (21) enthält, der entsprechend der zu übertragenden Sekundär-Information (I2) gesteuert wird, und daß
- die Reihenschaltung in Reihe mit einer Diode (11) unmittelbar parallel zur Sekundärwicklung (w2) liegt, wobei die Durchlaßrichtung der Diode (11) und die des Gleichrichter-Elements (10) in bezug auf ihre Verbindung mit der Sekundärwicklung (w2) entgegengesetzt sind.

3. Anordnung nach Anspruch 2,
**dadurch gekennzeichnet,** daß
- die Schaltanordnung (7) ein elektronisches Schaltelement ist.

4. Anordnung nach Anspruch 2 oder 3,
**dadurch gekennzeichnet,** daß
- die Auswerteschaltung (14) und der Auswertebaustein (23) jeweils ein Komparator-Element (17, 24) enthält, das beim Überschreiten eines Eingangsspannungswertes ein digitales Signal der einen Wertigkeit und beim Unterschreiten eines weiteren Eingangsspannungswertes ein digitales Signal der anderen Wertigkeit abgibt.

5. Anordnung nach Anspruch 1,
**dadurch gekennzeichnet,** daß
- bei einem Gegentaktwandler die Schaltanordnung (33) aus zwei als elektronische Schalter wirkenden Buffern (35, 36) besteht, von denen einer (36) einen invertierenden Ein- oder Ausgang aufweist,
- beide Buffer (35,36) eingangsseitig an einen Steuerausgang (37) der Ansteuerschaltung (38) angeschlossen sind und der eine Buffer (35) ausgangsseitig an ein Ende (A) der Primärwicklung (w3) und der andere den invertierenden Ein- oder Ausgang aufweisende Buffer (36) ausgangsseitig an das andere Ende (E) der Primärwicklung (w3) 5 angeschlossen ist und der Betriebsspannungsanschluß der Buffer (35, 36) mit der Gleichspannung (Uhp) verbunden ist.

6. Anordnung nach Anspruch 1 oder 5,
**dadurch gekennzeichnet,** daß
- die Ansteuerschaltung (38) einen zusätzlichen Ausgang aufweist, von dem ein Tristate-Signal zur Unterbrechung des Stromflusses durch die Primärwicklung (w3) abgegeben wird,
- auf der Sekundärseite des Schaltnetzteiles (30) eine Sendeeinrichtung (54) vorgesehen ist, die die Belastung der Sekundärwicklung (w4) entsprechend einer zur Primärseite des Schaltnetzteiles (30) zu übertragenden Sekundär-Information (I4) bei der Unterbrechung des Stromflusses durch die Primärwicklung (w3) niederohmig schaltet, und
- mit einem Ende (A) der Primärwicklung (w3) ein die Sekundär-Information (I4) erkennender Auswertebaustein (57) verbunden ist:

7. Anordnung nach Anspruch 6,
**dadurch gekennzeichnet**, daß
- die Sendeeinrichtung (54) ein mit seiner Schaltstrecke parallel zum Gleichrichter-Element (42) liegendes elektronisches Schaltorgan (55) enthält und
- die Auswerteschaltung (49) einen Komparator mit einer fest vorgegebenen Schwelle (41) aufweist.

8. Anordnung nach einem der Ansprüche 5 bis 7,
**dadurch gekennzeichnet**, daß
- der Auswertebaustein (57) eine Logikschaltung (59) enthält,
- an der eingangsseitig die Spannung (Uw3A) an einem Ende (A) der Primärwicklung (w3), das Signal am Steuerausgang (37) der Ansteuerschaltung (38) und das Tristate-Signal liegen.

## Claims

1. Arrangement for electrically isolated transmission of auxiliary power and items of information to an electronic unit (1), in which arrangement
- a primary winding (w1) of a switched-mode power supply (4) which operates as a forward converter and has a transformer (6) having at least one primary winding (wl) and one secondary winding (w2), forms a series circuit arrangement with a controllable circuit arrangement (7), and this series circuit arrangement is connected to input terminals (5, M1) of the arrangement that carry a direct voltage (Uhp),
- the secondary winding (w2) is, on the one hand, connected by way of a rectifier element (10) to an output terminal (3) and, on the other hand, is connected directly to the other output terminal (M2) of the switched-mode power supply (4),
- a trigger circuit (9) of the circuit arrangement (7) is connected to a further input terminal (13) of the arrangement, which input terminal carries the item of primary information (I1) to be transmitted, and is constructed in such a way that it actuates the circuit arrangement (7) in accordance with the item of primary information (I1) to be transmitted to the secondary side of the switched-mode power supply (4),
- there is connected to a circuit point between the secondary winding (w2) and rectifier element (10) an evaluation circuit (14), which recognises the item of primary information (I1),
- there is provided on the secondary side of the switched-mode power supply (4) a transmitting device (18), which switches the load of the secondary winding (w2) to low resistance in accordance with an item of secondary information (I2) to be transmitted to the primary side (2) of the switched-mode power supply (4) when the circuit arrangement (7) is open, and
- there is connected to one end (E) of the primary winding (w1) an evaluation module (23), which recognises the item of secondary information (I2).

2. Arrangement according to claim 1,
characterised
- in that in the case of a single-ended transducer, the transmitting device (18) contains a series circuit arrangement comprising a load resistor (22) and the break distance of an electronic switch (21), which is controlled in accordance with the item of secondary information (I2) to be transmitted, and
- in that the series circuit arrangement lies in series with a diode (11), directly in parallel with the secondary winding (w2), with the through direction of the diode (11) and that of the rectifier element (10) being opposed with respect to their connection to the secondary winding (w2).

3. Arrangement according to claim 2,
characterised in that
- the circuit arrangement (7) is an electronic switch element.

4. Arrangement according to claim 2 or 3,
characterised in that
- the evaluation circuit (14) and the evaluation module (23) each contain a comparator element (17, 24), which outputs a digital signal having the one value when an input threshold value is exceeded and outputs a digital signal having the other value when there is a fall below a further input voltage threshold.

5. Arrangement according to claim 1,
characterised in that
- in the case of a push-pull transducer, the circuit arrangement (33) comprises two buffers (35, 36) which act as electronic switches, one (36) of which has an inverting input or output, and
- both buffers (35, 36) are connected, on the input side, to a control output (37) of the trigger circuit (38) and the one buffer (35) is connected, on the output side, to one end (A) of the primary winding (w3), and the other buffer (36), which has the inverting input or output, is connected, on the output side, to the other end (E) of the primary winding (w3) and the operating voltage terminal of the buffers (35, 36) is connected to the direct voltage (Uhp).

6. Arrangement according to claim 1 or 5,
characterised in that
- the trigger circuit (38) has an additional output, from which a tristate signal is output in order to interrupt the flow of current through the primary winding (w3),
- there is provided on the secondary side of the switched-mode power supply (30) a transmitting device (54) which, when the flow of current through the primary winding (w3) is interrupted, switches the load of the secondary winding (w4) to low resistance in accordance with an item of secondary information (I4) to be transmitted to the primary side of the switched-mode power supply (30), and
- there is connected to an end (A) of the primary winding (w3) an evaluation module (57), which recognises the item of secondary information (I4).

7. Arrangement according to claim 6,
characterised in that
- the transmitting device (54) contains an electronic switch element (55), the break distance of which lies in parallel with the rectifier element (42), and
- the evaluation circuit (49) has a comparator having a permanently specified threshold (41).

8. Arrangement according to one of claims 5 to 7,
characterised in that
- the evaluation module (57) contains a logic circuit (59),
- at which, on the input side, the voltage (Uw3A) at one end (A) of the primary winding (w3), the signal at the control output (37) of the trigger circuit (38) and the tristate signal lie.

## Revendications

1. Dispositif pour la transmission, avec isolation galvanique, d'énergie auxiliaire et d'informations à une unité électronique (1), dans lequel
- un enroulement primaire (w1) d'une alimentation à découpage (4), fonctionnant comme convertisseur et ayant un transformateur (6) comportant au moins un enroulement primaire (wl) et un enroulement secondaire (w2), forme avec un dispositif de commutation (7) pouvant être commandé un circuit série et ce circuit série est raccordé à des bornes d'entrée (5, M1) conduisant une tension continue (Uhp),
- l'enroulement secondaire (w2) est relié d'une part par l'intermédiaire d'un élément redresseur (10) à une borne de sortie (3) et d'autre part directement à l'autre borne de sortie (M2) de l'alimentation à découpage (4),
- un circuit de commande (9) du dispositif de commutation (7) est raccordé à une autre borne d'entrée (13), du dispositif, conduisant l'information côté primaire (I1) à transmettre et est réalisé de telle sorte qu'il actionne le dispositif de commutation (7) en fonction de l'information côté primaire (I1) à transmettre au côté secondaire de l'alimentation à découpage (4),
- un circuit d'exploitation (14), détectant l'information côté primaire (I1), est raccordé à un point de connexion entre l'enroulement secondaire (w2) et l'élément redresseur (10),
- il est prévu, du côté secondaire de l'alimentation à découpage (4), un dispositif émetteur (18) qui commute à basse impédance la charge de l'enroulement secondaire (w2) en fonction d'une information côté secondaire (I2) à transmettre au côté primaire (2) de l'alimentation à découpage (4) lorsque le dispositif de commutation (7) est ouvert, et
- un composant d'exploitation (23) détectant l'information côté secondaire (I2) est relié à une extrémité (E) de l'enroulement primaire (w1).

2. Dispositif selon la revendication 1,
caractérisé par le fait que
- dans le cas d'un convertisseur à alternance simple, le dispositif émetteur (18) contient un circuit série composé d'une résistance de charge (22) et de la voie de commutation d'un interrupteur électronique (21) qui est commandé en fonction de l'information côté secondaire (I2) à transmettre, et que
- le circuit série se trouve en série avec une diode (11) directement en parallèle avec l'enroulement secondaire (w2), le sens passant de la diode (11) et celui de l'élément redresseur (10) étant opposés quant à leur liaison avec l'enroulement secondaire (w2).

3. Dispositif selon la revendication 2,
caractérisé par le fait que
- le dispositif de commutation (7) est un élément de commutation électronique.

4. Dispositif selon la revendication 2 ou 3,
caractérisé par le fait que
- le circuit d'exploitation (14) et le composant d'exploitation (23) contiennent chacun un élément comparateur (17, 24) qui fournit, lorsque la tension est supérieure à une certaine valeur de tension d'entrée, un signal numérique d'une certaine valeur et, lorsque la tension est inférieure à une autre valeur de tension d'entrée, un signal numérique d'une autre valeur.

5. Dispositif selon la revendication 1,
caractérisé par le fait que
- dans le cas d'un convertisseur symétrique, le dispositif de commutation (33) est constitué de deux buffers (35, 36) qui agissent comme interrupteur électronique et parmi lesquels l'un (36) a une entrée inversée ou une sortie inversée,
- les deux buffers (35, 36) sont raccordés en entrée à une sortie de commande (37) du circuit de commande (38), le buffer (35) est raccordé en sortie à une extrémité (A) de l'enroulement primaire (w3), l'autre buffer (36) comportant une entrée inversée ou une sortie inversée est raccordé en sortie à l'autre extrémité (E) de l'enroulement primaire (w3) et la borne de tension de fonctionnement des buffers (35, 36) est reliée à la tension continue (Uhp).

6. Dispositif selon la revendication 1 ou 5,
caractérisé par le fait que
- le circuit de commande (38) comporte une sortie supplémentaire qui délivre un signal trois états pour l'interruption du flux de courant à travers l'enroulement primaire (w3),
- il est prévu du côté secondaire de l'alimentation à découpage (30) un dispositif émetteur (54) qui commute à basse impédance la charge de l'enroulement secondaire (w4) en fonction d'une information côté secondaire (I4) à transmettre au côté primaire de l'alimentation à découpage (30) lors de l'interruption du flux de courant à travers l'enroulement primaire (w3), et que
- un composant d'exploitation (57) détectant l'information côté secondaire (I4) est relié à une extrémité (A) de l'enroulement primaire (w3).

7. Dispositif selon la revendication 6,
caractérisé par le fait que
- le dispositif émetteur (54) contient un élément de commutation électronique (55) qui se trouve par sa voie de commutation en parallèle avec l'élément redresseur (42), et que
- le circuit d'exploitation (49) comporte un comparateur ayant un seuil (41) prescrit de manière permanente.

8. Dispositif selon l'une des revendications 5 à 7,
caractérisé par le fait que
- le composant d'exploitation (57) contient un circuit logique (59) auquel se trouvent en entrée la tension (Uw3a) à une extrémité (A) de l'enroulement primaire (w3) , le signal à la sortie de commande (37) du circuit de commande (38) et le signal trois états.
